# EUROPÄISCHE PATENTANMELDUNG

(11) **EP 2 460 860 A1**
(43) Veröffentlichungstag der Anmeldung: **06.06.2012**
(21) Anmeldenummer: 10193480.0
(22) Anmeldetag: 02.12.2010
(51) Int. Cl.: C09D 9/00, C11D 7/50

(54) **Verwendung von Mischungen zur Entfernung von Polyurethanen von Metalloberflächen**

(71) Anmelder: BASF SE, 67056 Ludwigshafen (DE)
(72) Erfinder: Montero Pancera, Sabrina, 68519, Viernheim (DE); Ferstl, Berthold, 64625, Bensheim (DE); Prüfe, Jürgen, 68723, Schwetzingen (DE); Ross, Marco, 67065, Ludwigshafen (DE)

(57) **Zusammenfassung**

Verwendung von Mischungen, enthaltend
(A) mindestens ein Lösungsmittel mit einem Flammpunkt von mindestens 80°C,
(B) mindestens einen bei Zimmertemperatur flüssigen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane,

zum Entfernen von Polyurethanen von Metalloberflächen.

## Beschreibung

Die vorliegende Erfindung betrifft die Verwendung von Mischungen, enthaltend
(A) mindestens ein Lösungsmittel mit einem Flammpunkt von mindestens 80°C,
(B) mindestens einen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane,
zum Entfernen von Polyurethanen von Metalloberflächen.

Weiterhin betrifft die vorliegende Erfindung ein Verfahren zum Entfernen von Polyurethanen von Metalloberflächen unter Verwendung von Mischungen, enthaltend
(A) mindestens ein Lösungsmittel mit einem Flammpunkt von mindestens 80°C,
(B) mindestens einen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane.

Weiterhin betrifft die vorliegende Erfindung Mischungen, mit denen sich das erfindungsgemäße Verfahren besonders gut ausführen lässt.

Polyurethane sind als Werkstoffe vielseitig einsetzbar und daher sehr gefragt. Sie lassen sich beispielsweise zu Dispersionen, zu Schaumstoffen und zu Filmen verarbeiten, weiterhin lassen sie sich als Thermoplaste verarbeiten. Viele Polyurethane sind über einen langen Zeitraum chemisch und mechanisch stabil. Außerdem lassen sie sich zu sehr komplizierten Formteilen und Filmen mit Musterung verarbeiten. Daher gibt es zahlreiche Werkzeuge, mit denen Polyurethane der unterschiedlichsten Konstitution verarbeitet werden können.

Eine Herausforderung bleibt jedoch, aus Werkzeugen die Reste von Polyurethan zu entfernen. Diese Herausforderung ist immer dann in besonderem Maße gegeben, wenn Metalloberflächen, von denen eine Musterung in das Polyurethan übertragen werden soll, gereinigt werden soll und die Muster sehr kleinteilige Elemente aufweist, beispielsweise Musterungen im µm-Bereich. Auch kleine Mengen an Rest-Polyurethan, die im Werkzeug verbleiben, können das Erscheinungsbild des nachfolgend hergestellten Körpers in erheblichem Maße stören. Daher ist man an einer vollständigen Entfernung der Restmengen von Polyurethan interessiert. Dazu bieten sich Lösungsmittel bzw. Lösungsmittelgemische an. Dabei ist einerseits eine gewisse Stärke des Lösungsmittels erwünscht. Andererseits sollte die Metalloberfläche, beispielsweise des Werkzeugs, nicht geschädigt werden.

Polyurethane können sehr unterschiedlich in ihren Strukturen sein, was Chemie und was Morphologie betrifft.

Aus WO 2006/056298 sind gewisse Mischungen und ihre Verwendung zur Entfernung von Resist-Resten von Kupfer-Oberflächen in Halbleiter-Anordnungen bekannt. Bei derartigen Resist-Resten handelt es sich um anorganische, organische oder metallorganische Plasma-generierte Substanzen, die vorzugsweise radikalisch polymerisierbar oder radikalisch auspolymerisiert sind und die beispielsweise beim Löcherbrennen in Halbleitern zurückbleiben.

Es bestand die Aufgabe, eine Mischung bereit zu stellen, mit der man Polyurethan von Metalloberflächen entfernen kann, ohne dass diese geschädigt werden. Es bestand weiterhin die Aufgabe, ein Verfahren zum Entfernen von Polyurethan von Metalloberflächen bereit zu stellen.

Dementsprechend wurde die eingangs definierte Verwendung von Mischungen gefunden.

Erfindungsgemäß verwendete Mischungen enthalten:
(A) mindestens ein Lösungsmittel mit einem Flammpunkt von mindestens 80°C, im Rahmen der vorliegenden Erfindung auch Lösungsmittel (A) genannt, bevorzugt Dimethylsulfoxid (DMSO),
(B) mindestens einen Korrosionsinhibitor, im Rahmen der vorliegenden Erfindung auch Korrosionsinhibitor (B) genannt,
(C) mindestens eine Base, gewählt aus organischen Aminen, Ammoniumhydroxiden und Alkalimetallhydroxiden, im Rahmen der vorliegenden Erfindung auch Base (C) genannt,
(D) Wasser und
(E) gegebenenfalls ein oder mehrere Polyurethane, im Rahmen der vorliegenden Erfindung auch Polyurethan (E) genannt.

Lösungsmittel (A) ist ein bei Zimmertemperatur flüssiges organisches Lösungsmittel, und Lösungsmittel (A) ist von Korrosionsinhibitor (B) und von Base (C) verschieden.

Lösungsmittel (A) hat einen Flammpunkt von mindestens 80°C, bevorzugt mindestens 85°C, bestimmbar im geschlossenen Tiegel, beispielsweise nach Pensky-Martens, DIN 51758, EN 22719, oder nach ASTM D 93.

Bevorzugt handelt es sich bei Lösungsmittel (A) um ein Lösungsmittel, welches keine Hydroxylgruppen aufweist. Besonders bevorzugt handelt es sich bei Lösungsmittel (A) um DMSO. Ganz besonders bevorzugt handelt es sich bei Lösungsmittel (A) um DMSO mit einem Metallionengehalt im Bereich von null bis 100 ppm (parts per million, bezogen auf Gewichtsanteile).

Korrosionsinhibitor (B) wird gewählt aus Substanzen, die von Lösungsmittel (A) und von Base (C) verschieden sind und die Korrosion von Metallen, beispielsweise Stahl oder Nickel, verlangsamen oder verhindern können. Beispiele sind insbesondere solche Substanzen, die Metallonsreaktion verlangsamen oder verhindern können.

Beispiele für bei Zimmertemperatur feste Korrosionsinhibitoren sind Benzotriazol, Zucker und Zuckeralkohole, beispielsweise Mannit und Sorbit.

Vorzugsweise ist Korrosionsinhibitor (B) bei Zimmertemperatur flüssig.

Bevorzugte Korrosionsinhibitoren (B), die bei Zimmertemperatur flüssig sind, sind gewählt aus Diolen, Triolen und Tetraolen. Dabei werden unter Diolen im Rahmen der vorliegenden Erfindung aliphatische Verbindungen mit zwei Hydroxylgruppen pro Molekül verstanden. Unter Triolen werden im Rahmen der vorliegenden Erfindung Verbindungen mit drei Hydroxylgruppen pro Molekül verstanden. Unter Tetraolen werden dementsprechend Verbindungen mit vier Hydroxylgruppen pro Molekül verstanden.

Beispiele für Korrosionsinhibitoren (B) sind Ethylenglykol, Propylenglykol, Diethylenglykol, Dipropylenglykol, Triethylenglykol, Tripropylenglykol, Polyethylenglykol, beispielsweise mit einem mittleren Molekulargewicht Mₙ im Bereich von 175 bis 25.000 g/mol, bevorzugt bis 10.000 g/mol, Polypropylenglykol, beispielsweise mit einem mittleren Molekulargewicht Mₙ im Bereich von 250 bis 4.000 g/mol, bevorzugt bis 2.500 g/mol, weiterhin 2,2-Dimethylpropan-1,3-diol und 2-Ethyl-2-hydroxymethyl-propan-1,3-diol.

Beispiele für als Korrosionsinhibitoren (B) bevorzugte Triole sind 1,2,4-Butantrio und insbesondere Glycerin, Beispiel für als Korrosionsinhibitoren (B) bevorzugte Tetraol ist Pentaerythrit.

Base (C) wird gewählt aus organischen Aminen, Ammoniumhydroxiden und Alkalimetallhydroxiden. Beispiele für organische Amine sind insbesondere geruchsarme Amine, beispielsweise tertiäre aliphatische Amine mit mindestens 14 C-Atomen pro Molekül, beispielsweise N,N-Dimethylstearylamin. Bevorzugte organische Amine sind Mono-, Bis- und Trihydroxyalkylamine, beispielsweise Ethanolamin, N,N-Diethanolamin, N-Methylethanolamin, N,N-Dimethylethanolamin, N-n-Butylethanolamin und Triethanolamin.

Unter den Begriff Amoniumhydroxide sollen im Rahmen der vorliegenden Erfindung in wässriger Lösung durch Protonierung von Ammoniak oder von organischen Aminen entstehende basische Verbindungen subsumiert werden. Bevorzugte Ammoniumhydroxide sind die Hydroxide von quaternären Ammoniumverbindungen, insbesondere die Hydroxide von Tetra-C₁-C₄-alkylammmonium, wobei die C₁-C₄-Alkylreste verschieden oder vorzugsweise gleich sein können. Bevorzugte Ammoniumhydroxide sind Tetraethylammoniumhydroxid und insbesondere Tetramethylammoniumhydroxid (kurz TMA).

Weitere geeignete Basen (C) sind gewählt aus Alkalimetallhydroxiden, insbesondere Natriumhydroxid und Kaliumhydroxid.

Erfindungsgemäß verwendete Mischungen enthalten weiterhin Wasser (D). Bei Wasser (D) kann es sich um unvorbehandeltes oder vorzugsweise destilliertes und durch andere an sich bekannte Methoden entsalztes Wasser handeln, beispielsweise um durch Verwendung eines Ionenaustauschers entsalztes Wasser.

In einer Ausführungsform der vorliegenden Erfindung weist erfindungsgemäß verwendete Mischung auf:
80 bis 95 Gew.-% bevorzugt 87 bis 92 Gew.-% Lösungsmittel (A),
0,5 bis 4 Gew.-%, bevorzugt 1,5 bis 2,5 Gew.-% Korrosionsinhibitor (B),
1 bis 6 Gew.-%, bevorzugt 2 bis 4 Gew.-% Base (C) und
3 bis 12 Gew.-%, bevorzugt 5 bis 10 Gew.-% Wasser (D),
wobei Angaben in Gew.-% stets auf gesamte Mischung bezogen sind.

Erfindungsgemäß verwendete Mischungen können weiterhin ein oder mehrere Polyurethane (E) enthalten. Bei Polyurethanen (E) kann es sich um aliphatische oder aromatische Polyurethane handeln, um Polyetherurethane oder Polyesterurethane oder um Polyurethane, die durch Polyaddtion von mindestens einem Diisocyanat und mindestens einem niedermolekularen Diol oder mindestens einer Verbindung, die mindestens zwei mit Isocyanat reaktionsfähige Gruppen aufweist, die verschieden oder gleich sein können, insbesondere NH₂, OH, SH und COOH.

In einer Ausführungsform der vorliegenden Erfindung enthält erfindungsgemäß verwendete Mischung null bis 30 Gew.-% Polyurethan (E), bezogen auf die Summe aus den Komponenten Lösungsmittel (A), Korrosionsinhibitor (B), Base (C) und Wasser (D).

Erfindungsgemäß eingesetzte Mischungen lassen sich durch Vermischen der Komponenten Lösungsmittel (A), Korrosionsinhibitor (B), Base (C) und Wasser (D) herstellen, wobei die Reihenfolge der Zugabe der Komponenten Lösungsmittel (A), Korrosionsinhibitor (B), Base (C) und Wasser (D) beim Vermischen unkritisch ist. Es ist jedoch bevorzugt, Base (C) zunächst mit Wasser (D) zu vermischen, wenn man als Base (C) Alkalimetallhydroxid oder Ammoniumhydroxid einzusetzen wünscht.

Polyurethan (E) muss man nicht zur erfindungsgemäße eingesetzten Mischung zusetzen. Man kann Mischungen, enthaltend als Komponenten Lösungsmittel (A), Korrosionsinhibitor (B), Base (C) und Wasser (D), mehrfach zum Entfernen von Polyurethan von Metalloberflächen einsetzen, ohne das entfernte Polyurethan abtrennen zu müssen. Entferntes Polyurethan verbleibt dann - gegebenenfalls mit Additiven - in der erfindungsgemäß eingesetzten Mischung.

Erfindungsgemäß dienen vorstehend beschriebene Mischungen zum Entfernen von Polyurethan von Metalloberflächen, insbesondere von Polyurethanen, die aus Resten von Schaumstoffen (Schäumen) und Resten von Filmen gewählt werden. Zu entfernendes Polyurethan kann beispielsweise thermoplastische Eigenschaften aufweisen. Zu entfernendes Polyurethan kann vernetzt sein oder unvernetzt.

Zu entfernendes Polyurethan kann beispielsweise rein vorliegen sein oder additiviert. Unter additiviert wird im Zusammenhang mit erfindungsgemäß zu entfernendem Polyurethan im Rahmen der vorliegenden Erfindung verstanden, dass Polyurethan ein oder mehrere Additive enthalten kann, beispielsweise UV-Stabilisatoren, Füllstoffe, Mattierungsmittel, Pigmente, Haftvermittler oder Griffverbesserer. Silikone können zum Beispiel zum Zwecke der Griffverbesserung in zu entfernendem Polyurethan sein. Als Füllstoffe sind beispielhaft zu nennen: SiO₂, Al₂O₃ und Schichtsilikate. Beispiele für wichtige Pigmente sind insbesondere Eisenoxidpigmente.

Als Metalloberflächen kommen beispielsweise Stahloberflächen, Nickeloberflächen, Aluminiumoberflächen und Oberflächen von Nickellegierungen in Frage, auch solche Nickellegierungen, die keine Stähle sind. Metalloberflächen im Sinne der vorliegenden Erfindung können gebürstet sein, sie können glatt sein oder gemustert, beispielsweise mit Rillen, sie können nicht passiviert sein oder passiviert.

In einer speziellen Ausführungsform können Metalloberflächen Ätznarben aufweisen. Dabei sollen unter Ätznarben nach ihrer Herstellung glatte Metalloberfläche verstanden werden, die durch Einwirkung von Säuren oder anderen, das Metall angreifende Substanzen zu definiert gewünschten, flächigen Narbenstrukturen verändert worden sind und deren Narbenstrukturen erhalten bleiben sollen, weil sie beispielsweise Teil eines Prägestempels oder eines Werkzeugs für den Spritzguss sind.

Metalloberflächen können reguläre oder irreguläre Form aufweisen. Sie können plan sein oder gebogen, beispielsweise konvex oder konkav. Es kann sich bei Metalloberflächen um eine Oberfläche handeln oder- im Falle der Innenoberfläche eines Topfes oder Kessels - um Kombinationen von verschiedenen geometrischen Anordnungen von Oberflächen.

Ein weiterer Gegenstand der vorliegenden Erfindung ist ein Verfahren zum Entfernen von Polyurethan von Metalloberflächen, kurz auch erfindungsgemäßes Verfahren genannt. Das erfindungsgemäße Verfahren dadurch gekennzeichnet, dass man eine Mischung verwendet, enthaltend
(A) mindestens ein Lösungsmittel mit einem Flammpunkt von mindestens 80°C,
(B) mindestens einen bei Zimmertemperatur flüssigen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane.

Zur Durchführung des erfindungsgemäßen Verfahrens geht man aus von einer Metalloberfläche, die mit Polyurethan verunreinigt ist, wobei als Verunreinigung vorhandenes Polyurethan vorstehend definiert ist. Metalloberflächen werden vorzugsweise gewählt aus Stahloberflächen, Aluminiumoberflächen, Nickeloberflächen oder Oberflächen von Nickellegierungen.

Metalloberflächen können beispielsweise die Innenseite von Rührgefäßen oder Rührkesseln betreffen oder die Innenseite von Rohren.

Metalloberflächen können beispielsweise Außen- oder vorzugsweise die Innenseite von Werkzeugen betreffen, beispielsweise Prägestempel, Extruder oder bevorzugt Werkzeuge (Formen) für Spritzgussmaschinen.

Als Verunreinigung vorhandenes Polyurethan kann beispielsweise als dünner Film, beispielsweise mit einer Dicke im Bereich von 1 µm bis 300 µm, auf der Metalloberfläche sein, und zwar vollflächig oder nur an einigen Stellen. In einer Variante kann als Verunreinigung vorhandenes Polyurethan nur in einigen Stellen der Metalloberfläche sein, die durch mechanische Mittel nur schwer zu erreichen sind, beispielsweise in Rillen oder in Kanten, Ecken oder Winkeln, insbesondere in Rillen und Hinterschnitten, die mechanisch nicht zu erreichen sind.

Metalloberflächen, zu entfernendes Polyurethan, eingesetzte Mischungen und die Komponenten Lösungsmittel (A), Korrosionsinhibitor (B), Base (C) und Wasser (D) sowie optional vorhandenes Polyurethan (E) sind vorstehend beschrieben.

Zur Durchführung des erfindungsgemäßen Verfahrens kann man auf verschiedene Weise vorgehen. Man kann beispielsweise eine mit Polyurethan verunreinigte Metalloberfläche mit erfindungsgemäßer Mischung besprühen und/oder abwischen.

Bevorzugt geht man jedoch so vor, dass man einen Gegenstand, der mindestens eine mit Polyurethan verunreinigte Metalloberfläche aufweist und der eine Temperatur im Bereich von 40 bis 90°C aufweist, in eine Mischung taucht, enthaltend
(A) mindestens ein Lösungsmittel mit einem Flammpunkt von mindestens 80°C,
(B) mindestens einen bei Zimmertemperatur flüssigen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane,
und danach trocknet.

In einer Variante taucht man den Gegenstand, der mindestens eine Metalloberfläche aufweist, für eine Zeitdauer von 5 Minuten bis zu 12 Stunden in die vorstehend beschriebene Mischung.

Während des Eintauchens kann man die Mischung bewegen, beispielsweise durch Schütteln oder Rühren. In einer anderen Variante spült man den Gegenstand, der eine mit Polyurethan verschmutzte Oberfläche aufweist, mit erfindungsgemäß eingesetzter Mischung, wenn möglich, mit Hilfe einer Pumpe. In einer Variante spült man den Gegenstand, der eine mit Polyurethan verschmutzte Oberfläche aufweist, mit erfindungsgemäß eingesetzter Mischung, wenn möglich, in Kreisfahrweise. In einer anderen Variante lässt man den Gegenstand, der mindestens eine mit Polyurethan verunreinigte Metalloberfläche aufweist, in der Mischung stehen oder liegen, ohne die Mischung zu bewegen.

Vor dem Trocknen kann man ein- oder mehrmals nachspülen, beispielsweise mit Wasser, vorzugsweise mit entsalztem Wasser.

Das Trocknen kann man beispielsweise bei vermindertem Druck durchführen, durch Luftzug beschleunigen, beispielsweise durch ein Gebläse, oder durch Heizen, oder durch eine Kombination von mindestens zwei der vorstehend genannten Maßnahmen.

Durch das erfindungsgemäße Verfahren erhält man auf einfach Weise sehr gut gereinigte Metalloberflächen. Die eingesetzte Mischung kann man mehrfach einsetzen, Anteile an Polyurethan (E) mindern die Wirksamkeit nicht oder nicht wesentlich.

Ein weiterer Gegenstand der vorliegenden Erfindung ist eine Mischung, enthaltend
(A) mindestens ein Lösungsmittel mit einem Flammpunkt von mindestens 80°C, bevorzugt DMSO,
(B) mindestens einen bei Zimmertemperatur flüssigen Korrosionsinhibitor,
(C) mindestens eine Base, gewählt aus organischen Aminen, Ammoniumhydroxiden und Alkalimetallhydroxiden,
(D) Wasser und
(E) ein oder mehrere Polyurethane.

Die Komponenten Lösungsmittel (A), Korrosionsinhibitor (B), Base (C) und Wasser (D) sowie Polyurethan (E) sind vorstehend beschrieben.

In einer Ausführungsform enthält erfindungsgemäße Mischung
80 bis 95 Gew.-% bevorzugt 87 bis 92 Gew.-% Lösungsmittel (A),
0,5 bis 4 Gew.-%, bevorzugt 1,5 bis 2,5 Gew.-% Korrosionsinhibitor (B),
1 bis 6 Gew.-%, bevorzugt 2 bis 4 Gew.-% Base (C) und
3 bis 12 Gew.-%, bevorzugt 5 bis 10 Gew.-% Wasser (D),
wobei Angaben in Gew.-% stets auf die Summe der Anteile von Lösungsmittel (A), Korrosionsinhibitor (B), Base (C) und Wasser (D) bezogen sind.

In einer Ausführungsform der vorliegenden Erfindung enthält erfindungsgemäße Mischung 0,1 bis 30 Gew.-% Polyurethan (E), bezogen auf die Summe aus Lösungsmittel (A), Korrosionsinhibitor (B), Base (C) und Wasser (D).

In einer Ausführungsform der vorliegenden Erfindung enthält erfindungsgemäße Mischung ein oder mehrere Additive für Polyurethane, beispielsweise UV-Stabilisatoren, Füllstoffe, Mattierungsmittel, Pigmente oder Griffverbesserer. Beispiele für Additive für Polyurethane sind vorstehend beschrieben.

Erfindungsgemäße Mischung lässt sich ein- oder mehrmals zur Entfernung von Polyurethan von Metalloberflächen einsetzen.

Die Erfindung wird durch Arbeitsbeispiele erläutert.

Angaben in % und in ppm beziehen sich im Rahmen der vorliegenden Erfindung stets auf Gew.-% bzw. Gew.-ppm, wenn nicht ausdrücklich anders beschrieben.

Die Überprüfung, ob eine Metalloberfläche schmutzfrei war, erfolgte durch visuelle Inspektion unter dem Lichtmikroskop und durch Messung der Oberflächenspannung der gereinigten Metalloberfläche mittels Testtinten (Arcotest), z.B. der Firma Arcotest, Mönsheim.

Herstellung von Mischungen:
Es wurde eine Mischung bereitet durch Vermischen von
   90 kg DMSO, Metallionengehalt unter 100 ppm,
   2 kg Ethylenglykol
   2 kg Tetramethylammoniumhydroxid, gelöst in 6 kg Wasser.

Als Metallionen im DMSO wurden überprüft: Al³⁺, Na⁺, Ca²⁺, Mg²⁺, K⁺, Fe²⁺/Fe³⁺, Zn²⁺. Der Gehalt war jeweils unter 10 ppm.

Man erhielt Mischung 1.

### Beispiel 1

Ein vernickeltes Stahlplättchen mit den Abmessungen 4-4 cm, das partiell mit einen Narbenmuster versehen war, das mit einem aliphatischen Polyurethan in Form eines dünnen Films (im Bereich von 30 bis 300 µm) und mit Polyurethan-Krümeln verschmutzt war, wurde warm (80°C) in Mischung 1 eingetaucht und unter gelegentlichem Bewegen darin 12 Stunden belassen. Danach entnahm man das vernickelte Stahlplättchen und spülte mit Wasser nach. Danach trocknete man in einem Trockenschrank (80°C).

Die Oberfläche des vernickelten Stahlplättchens war vollkommen schmutzfrei und zeigte keinerlei Korrosionsschäden.

### Beispiel 2:

Man erwärmte Mischung 1 nach Durchführung von Beispiel 1 auf 80°C.

Ein vernickeltes Stahlplättchen mit den Abmessungen 4-4 cm, das partiell mit einen Narbenmuster versehen war, das mit einem aliphatischen Polyurethan in Form eines dünnen Films (im Bereich von 30 bis 300 µm) und mit Polyurethan-Krümeln verschmutzt war und das Zimmertemperatur hatte, wurde in die auf 80°C warme Mischung 1 (nach Durchführung von Beispiel 1) eingetaucht und unter gelegentlichem Bewegen darin 12 Stunden belassen. Danach entnahm man das Stahlplättchen und spülte mit Wasser nach. Danach trocknete man in einem Trockenschrank (80°C).

Die Oberfläche des Stahlplättchens war vollkommen schmutzfrei und zeigte keinerlei Korrosionsschäden.

## Patentansprüche

1. Verwendung von Mischungen, enthaltend
(A) mindestens ein Lösungsmittel mit einem Flammpunkt von mindestens 80°C,
(B) mindestens einen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane,
zum Entfernen von Polyurethan von Metalloberflächen.

2. Verwendung nach Anspruch 1, **dadurch gekennzeichnet, dass** es sich bei Metalloberflächen um Stahloberflächen, Aluminiumoberflächen, Nickeloberflächen oder Oberflächen von Nickellegierungen handelt.

3. Verwendung nach Anspruch 1 oder 2, **dadurch gekennzeichnet, dass** Korrosionsinhibitor (B) bei Zimmertemperatur flüssig ist.

4. Verwendung nach einem der Ansprüche 1 bis 3, **dadurch gekennzeichnet, dass** Korrosionsinihibitor (B) gewählt wird aus Ethylenglykol, Propylenglykol, Diethylenglykol, Dipropylenglykol, Triethylenglykol, Tripropylenglykol, Polyethylenglykol, Polypropylenglykol, Glycerin, 2,2-Dimethylpropan-1,3-diol und 2-Ethyl-2-hydroxymethyl-propan-1,3-diol.

5. Verwendung nach einem der Ansprüche 1 bis 4, **dadurch gekennzeichnet, dass** es sich bei Lösungsmittel (A) um Dimethylsulfoxid (DMSO) handelt.

6. Verwendung nach einem der Ansprüche 1 bis 5, **dadurch gekennzeichnet, dass** es sich bei Polyurethan um Reste von Filmen oder Schäumen handelt.

7. Verwendung nach einem der Ansprüche 1 bis 6, **dadurch gekennzeichnet, dass** Polyurethan ein oder mehrere Additive enthalten kann, gewählt aus Griffmitteln, Füllstoffen, Farbpigmenten und Mattierungsmitteln.

8. Verwendung nach einem der Ansprüche 1 bis 7, **dadurch gekennzeichnet, dass** man als Base (C) mindestens ein Tetra-C₁-C₄-alkylammoniumhydroxid wählt, wobei C₁-C₄-Alkyl jeweils verschieden oder gleich sein kann.

9. Verwendung nach einem der Ansprüche 1 bis 8, **dadurch gekennzeichnet, dass** man als Base (C) Tetramethylammoniumhydroxid oder Tetraethylammoniumhydroxid wählt.

10. Verwendung nach einem der Ansprüche 1 bis 9, **dadurch gekennzeichnet, dass** die Mischung enthält:
80 bis 95 Gew.-% Lösungsmittel (A),
0,5 bis 4 Gew.-% Korrosionsinhibitor (B),
1 bis 6 Gew.-% Base (C) und
3 bis 12 Gew.-% Wasser (D),
wobei Angaben in Gew.-% stets auf gesamte Mischung bezogen sind.

11. Verfahren zum Entfernen von Polyurethanen von Metalloberflächen, **dadurch gekennzeichnet, dass** man eine Mischung verwendet, enthaltend
(A) mindestens ein Lösungsmittel mit einem Flammpunkt von mindestens 80°C,
(B) mindestens einen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane.

12. Verfahren nach Anspruch 11, **dadurch gekennzeichnet, dass** es sich bei Metalloberflächen um Stahloberflächen, Aluminiumoberflächen, Nickeloberflächen oder Oberflächen von Nickellegierungen handelt.

13. Verfahren nach Anspruch 11 oder 12, **dadurch gekennzeichnet, dass** Korrosionsinihibitor (B) bei Zimmertemperatur flüssig ist.

14. Verfahren nach einem der Ansprüche 11 bis 13, **dadurch gekennzeichnet, dass** man einen Gegenstand, der mindestens eine Metalloberfläche aufweist und der eine Temperatur im Bereich von 40 bis 90°C aufweist, in eine Mischung taucht, enthaltend
(A) mindestens ein Lösungsmittel mit einem Flammpunkt von mindestens 80°C,
(B) mindestens einen Korrosionsinhibitor,
(C) mindestens eine Base, gewählt aus organischen Aminen, Ammoniumhydroxiden und Alkalimetallhydroxiden,
(D) Wasser und
(E) gegebenenfalls ein oder mehrere Polyurethane,
und danach trocknet.

15. Verfahren nach einem der Ansprüche 11 bis 14, **dadurch gekennzeichnet, dass** man die Mischung mehrfach wiederverwendet.

16. Mischung, enthaltend
(A) mindestens ein Lösungsmittel mit einem Flammpunkt von mindestens 80°C,
(B) mindestens einen Korrosionsinhibitor,
(C) mindestens eine Base, gewählt aus organischen Aminen, Ammoniumhydroxiden und Alkalimetallhydroxiden,
(D) Wasser und
(E) ein oder mehrere Polyurethane.
